(19) Europäisches Patentamt
European Patent Office
Office européen des brevets

(11) **EP 2 124 025 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(51) Int Cl.:
***G01G 17/06*** *(2006.01)*     ***G01G 11/00*** *(2006.01)*
***G01G 13/00*** *(2006.01)*

(21) Anmeldenummer: **08156708.3**

(22) Anmeldetag: **22.05.2008**

(54) **Verfahren und Vorrichtung zum Füllen von Zielbehältern**

Method and device for filling target containers

Procédé et dispositif destinés au remplissage de récipients cibles

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**25.11.2009 Patentblatt 2009/48**

(73) Patentinhaber: **Mettler-Toledo AG**
**8606 Greifensee (CH)**

(72) Erfinder: **Blöchlinger, Marc**
**8707 Uetikon am See (CH)**

(56) Entgegenhaltungen:
**EP-A- 1 752 744     FR-A- 2 663 008**
**JP-A- 58 072 013     US-A1- 2001 027 823**

## Beschreibung

Die vorliegende Erfindung bezieht sich auf ein Verfahren und eine Vorrichtung zum Füllen von Zielgefässen mit einer vorbestimmten Zielmasse einer fliessfähigen Substanz aus einem Reservoir.

Solche Füllvorrichtungen finden insbesondere beim Dosieren kleiner Massen, wie sie beispielsweise im Pharmabereich notwendig sind ihre Verwendung. Häufig sind solche Zielgefässe auf einer Waage platziert, um die Masse der aus der Dosiervorrichtung ausgetragenen Substanz zu verwiegen, so dass sie anschliessend bestimmungsgemäss weiter verarbeitet werden kann.

Die zu dosierende Substanz befindet sich beispielsweise in einem Entnahmegefäss bzw. Reservoir, welches einen Dosierkopf aufweist. Dabei ist es wünschenswert, die zu dosierende Substanz durch eine Öffnung der Dosiervorrichtung auszutragen, so dass sich am Ende des Füllvorgangs eine vorbestimmte Zielmasse im Zielgefäss befindet. Dabei ist wichtig, dass die tatsächlich sich im Zielgefäss befindende Masse möglichst genau der vorbestimmten Zielmasse entspricht und diese genau bestimmt ist. Des Weiteren ist wichtig, dass der Abfüllvorgang möglichst schnell durchgeführt werden kann.

Die EP 1 752 744 A offenbart ein Verfahren zum Füllen von Zielgefässen mit einer vorbestimmten Zielmasse von Partikeln aus einem Reservoir mit Hilfe einer Dosiervorrichtung zum dosierten Abfüllen von Partikeln in das Zielgefäss. Dazu liegen die abzufüllenden Partikel auf einem Netz. Durch einen Schlagmechanismus wird ein Teil der Partikel dazu gebracht vom Netz in das Zielgefäss zu fallen. Nachteilig dabei ist, dass das Netz gut auf die Partikelgrösse abgestimmt sein muss, da ansonsten bei zu kleiner Maschenweite des Netzes das Netz verstopft und bei zur grosser Maschenweite des Netzes der Partikelfluss nicht kontrollierbar ist. Durch die Verwendung eines Ventils wird dieses Problem umgangen. Aus US 2001/027823 A1 oder FR 2 663 008 A können solche Ventile entnommen werden.

Aus dem Stand der Technik sind Dosierverfahren bekannt, die auf einer volumetrischen Messung der ausgetragen Substanz basieren. Für eine Substanz mit der Dichte $\rho$ und einem variablen Öffnungsquerschnitt des Ventils $A$ und damit resultierender Austragsgeschwindigkeit $u$ der Substanz ergibt sich die Masse $m_z$ der sich im Zielgefäss befindenden Substanz aus:

$$m_z = \int\limits_{t_{auf}}^{t_{zu}} \dot{m}(t)dt = \int\limits_{t_{auf}}^{t_{zu}} \rho\dot{V}(t)dt = \int\limits_{t_{auf}}^{t_{zu}} \rho(Au)(t)dt = \int\limits_{t_{auf}}^{t_{zu}} \rho A(t)u(A,h,d,...)dt$$

Besonders die Ausstraggeschwindigkeit $u$ unterliegt vielen Einflussfaktoren, wie beispielsweise der freien Fläche $A$ des Ventils, dem aus der Füllstandshöhe $h$ der sich im Reservoir befindender Substanz resultierenden statischen Druck und den rheologischen Eigenschaften der Substanz, wie beispielsweise der Korngrösse $d$ des Pulvers. Vor allem die rheologischen Eigenschaften sind oft sehr komplex und unterliegen Einflussfaktoren, die nicht genauer bekannt sind. Beispielsweise ist es schwierig die bei Binghamschen Medien oder Pulvern auftretende Fliessverzögerung zu Beginn des Fliessprozesses zu berücksichtigen. Insbesondere beim Abfüllen pulverförmiger Substanzen spielen Faktoren wie beispielsweise Korngrösse, Feuchtegehalt und Oberflächenbeschaffenheit der einzelnen Körner eine grosse Rolle.

Die US 6380495 B1 offenbart eine Methode zur Optimierung der Genauigkeit, der während eines Abfüllvorgangs aus einem Reservoir in ein Zielgefäss eingebrachte Zielmasse. Dazu wird zuerst während eines vorbestimmten Zeitraums ein zwischen dem Reservoir und dem Zielgefäss angeordnetes Ventil über einen bestimmten Zeitraum maximal geöffnet und dann schlagartig geschlossen. Während des Füllvorgangs wird das Gewicht der eingebrachten Zielmasse durch eine Waage überwacht. Da eine gewisse Zeit zum Schliessen des Ventils notwendig ist und sich ausserdem während des Füllvorgangs Material zwischen dem Ventil und dem Zielgefäss befindet, kommt es zu Ungenauigkeiten. Dadurch ist die zum Zeitpunkt des schlagartigen Schliessens des Ventils auf der Waage angezeigte Masse niedriger als die am Ende des Füllvorgangs sich im Zielgefäss befindende Zielmasse. Dieser Fehler wird über eine rekursive Methode der kleinsten Quadrate bestimmt und in einer nachfolgenden Iteration korrigiert. Problematisch ist hierbei, dass das Ventil schlagartig geschlossen wird. Der abzufüllende Stoff wird beim schlagartigen Schliessen zusätzlichen Kräften ausgesetzt. Vor allem beim Abfüllen empfindlicher Stoffe, wie beispielsweise Feinchemikalien oder pharmazeutischer Stoffe ist es wichtig, dass der Stoff möglichst schonend behandelt wird und möglichst wenigen Belastungen ausgesetzt wird. Ansonsten könnte es zu einer ungewünschten Veränderung der Stoffeigenschaften und somit einer Beschädigung des Stoffes kommen. Auch kann es beim schlagartigen Schliessen zu einer Verdichtung des Materials kommen. Diese Verdichtung kann die Materialeigenschaften und somit auch die Fliesseigenschaften des Materials verändern, was die Reproduzierbarkeit des Füllvorgangs beeinträchtigt. Ein weiteres Problem besteht darin, dass beim ersten Abfüllen noch keine Daten aus vorhergehenden Abfüllvorgängen bekannt sind. Es kann somit für den ersten Füllvorgang keine Korrektur durchgeführt werden, was unter Umständen zu einer fehlerhaften Zielmasse führt.

Es ist somit Aufgabe der vorliegenden Erfindung ein Verfahren und eine Vorrichtung zum Füllen von Zielgefässen mit einer vorbestimmten Zielmasse einer fliessfähigen Substanz aus einem Reservoir zu schaffen, dass das auszutragenden Material möglichst wenig strapaziert und genau ist.

Diese Aufgabe wird mit einem Verfahren und einer Vorrichtung gelöst, welche die in den unabhängigen Patentansprüchen angegebenen Merkmale aufweisen. Weitere vorteilhafte Ausführungsformen können den abhängigen Ansprüchen entnommen werden.

Das erfindungsgemässe Verfahren und die erfindungsgemässe Vorrichtung füllt ein Zielgefäss mit einer vorbestimmten Zielmasse $m_z$ einer fliessfähigen Substanz aus einem Reservoir mit Hilfe einer Dosiervorrichtung zum dosierten Abfüllen der Substanz in das Zielgefäss. Die Dosiervorrichtung weist ein Ventil auf, das eine variable Einstellung des Massenstroms $\dot{m}$ vom Reservoir in das Zielgefäss ermöglicht. Des weiteren weist die Dosiervorrichtung eine Zeiterfassung zur Bestimmung der seit Beginn des Füllvorgangs verstrichenen Zeit $t$, eine Waage zur Bestimmung der Masse $m$ der sich im Zielgefäss befindenden Substanz und einer Steuereinheit mit einem Ventilsteuerungsmodul zur Steuerung des Ventils auf. Ferner weist die Steuereinheit ein Schätzmodul und ein Korrekturmodul auf, wobei

- das Schätzmodul zu mindestens einem Zeitpunkt $t$ während des Füllvorgangs eine Schätzung der voraussichtlich am Ende des Füllvorgangs beim Zeitpunkt $t_2$ sich im Zielgefäss befindenden Masse $\tilde{m}(t,t_2)$ durchführt, wobei bei der Schätzung davon ausgegangen wird, dass das Ventil ab dem Zeitpunkt $t$ nach einem vordefinierten Schliessprofil geschlossen wird und der Füllvorgang beim Zeitpunkt $t_2$ abgeschlossen ist und

- das Korrekturmodul die zum Zeitpunkt $t$ geschätzte Masse $\tilde{m}(t,t_2)$ mit der Zielmasse $m_z$ vergleicht und falls die geschätzte Masse $\tilde{m}(t,t_2)$ kleiner als die Zielmasse $m_z$ ist, das Ventil derart angesteuert wird, dass es um eine Zeitdifferenz $\Delta t$ länger mit dem zum Zeitpunkt $t$ vorliegenden Massenstrom $\dot{m}$ geöffnet bleibt und/oder der Massenstrom $\dot{m}$ zum Zeitpunkt $t$ erhöht wird.

Vorteilhaft bei dieser Anordnung ist, dass verschiedene Einflüsse durch das Korrekturmodul ausgeglichen werden. Mögliche Einflussfaktoren sind beispielsweise Anlaufverzögerungen des Fliessvorgangs, spezifische rheologische Eigenschaften der Substanz, die Füllstandhöhe des Materials im Reservoir, geometrische Eigenschaften des Ventils oder Materialeigenschaften, wie beispielsweise Korngrösse.

Ein weiterer Vorteil dieses Verfahrens besteht in der Dosierung von toxischen Substanzen, da es einen automatischen Betrieb dieser Dosierung zulässt. Dadurch sinkt die Gefahr für die Bedienungsperson, mit der toxischen Substanz in Kontakt zu kommen.

Unter dem Schliessprofil wird dabei eine Reduktion des Massenstroms $\dot{m}$ von einem beliebigen Zeitpunkt $t$ während des Füllvorgangs bis zum Ende des Füllvorgangs beim Zeitpunkt $t_2$ verstanden. Beim Zeitpunkt $t_2$ am Ende des Füllvorgangs ist das Ventil soweit geschlossen dass keine Masse $m$ aus dem Ventil austreten kann, wobei des Ventil nicht schlagartig geschlossen wurde. Der Verlauf des Massenstroms $\dot{m}$ während des Schliessvorgangs kann dabei beliebig sein. Einfacherweise wird jedoch meistens von einer linearen Reduktion des Massenstroms $\dot{m}$ während des Schliessens des Ventils ausgegangen.

Besonders bevorzugt wird die variable Einstellung des Massenstroms $\dot{m}$ mit Hilfe eines variablen Öffnungsquerschnitt $A$ des Ventils ermöglicht.

Insbesondere wird die variable Einstellung des Massenstroms $\dot{m}$ mit Hilfe einer Förderschnecke mit variabler Drehzahl ermöglicht.

Idealerweise wird die variable Einstellung des Massenstroms $\dot{m}$ mit Hilfe eines rotierbaren Rührwerks mit variabler Drehzahl ermöglicht.

Unter Öffnung des Ventils wird eine kontinuierliche Erhöhung des Massenstroms $\dot{m}$ verstanden. Diese Erhöhung des Massenstroms $\dot{m}$ kann beispielsweise durch eine Vergrösserung des Öffnungsquerschnitt $A$ des Ventils, einer Erhöhung der Drehzahl der Förderschnecke und/oder der Erhöhung der Drehzahl eines rotierbaren Rührwerks erzielt werden.

Vorzugsweise verwendet das Schätzmodul Daten aus den vorhergehenden Füllvorgängen. Relevante Daten können beispielsweise Informationen über die notwendige Füllzeit $t_2$, das Integral des Öffnungsquerschnitts des Ventils

$$\int_{t_1}^{t_2} A(t)\,dt$$

oder das tatsächlich am Ende des Dosiervorgangs vorliegende Gewicht $m(t_2)$ sein. Insbesondere das aus dem Öffnungsintegral und dem tatsächlich am Ende des Dosiervorgangs vorliegende Gewicht $m(t_2)$ gebildete Gewichtsäquivalent

$$f_a = \frac{m(t_2)}{\displaystyle\int_{t_1}^{t_2} A(t)\,dt}$$

ist ein wichtiger Faktor, da in ihm implizit die Fliesseigenschaften wie beispielsweise die Verzögerung des Fliessvorgangs zu Beginn des Füllvorgang, der abnehmende statische Druck mit abnehmender Füllhöhe $h$ der im Reservoir enthaltenen Substanz enthalten sind. So hat beispielsweise die Geometrie des Ventils, die Dichte $\rho$ der Substanz und die Fliessverzögerung der Substanz einen wesentlichen Einfluss auf das Gewichtsäquivalent $f_a$. In die Fliessverzögerung gehen beispielsweise bei pulverförmigen Substanzen die Korngrösse, die Korngrössenverteilung, die Form der Körner, die Oberflächenbeschaffenheit der Körner ein. Auch die Lage der einzelnen Körner beim Öffnen des Ventils kann einen Einfluss auf das Gewichtsäquivalent $f_a$ ausüben. Aus diesen Gründen wird das Gewichtsäquivalent $f_a$ bevorzugt für die Schätzung des Gewichts $m(t_2)$ herangezogen. Diese Fliessparameter aus vorhergehenden Füllvorgängen können in einem Speichermodul, insbesondere RFID (Radio Frequency Identification) Marken abgelegt werden und in späteren Füllvorgängen verwendet werden. Besonders vorteilhaft ist es die RFID Marken am Reservoir zu befestigen, da dadurch ein direkter Zusammenhang zwischen der sich im Reservoir befindenden Substanz und den in der RFID Marke gespeicherten Daten gewährleistet ist.

Beim ersten Füllvorgang sind noch keine Daten aus vorangehenden Füllvorgängen bekannt. Um ein Überschreiten der gewünschten Zielmasse $m_z$ zu vermeiden, ist es deshalb notwendig den ersten Füllvorgang langsam vorzunehmen. Nach dem ersten Füllvorgang sind dann Daten bekannt, auf deren Basis eine Schätzung der nachfolgenden Füllvorgänge durchgeführt werden kann.

Besonders vorteilhaft ist es, wenn bei einem Füllvorgang das Ventil genau einmal geöffnet und genau einmal geschlossen wird. Dies ist vor allem beim Abfüllen von empfindlichen Stoffen von zentraler Bedeutung, da auf diese Weise die abzufüllende Substanz, wie sie beispielsweise im Pharmabereich oder bei der Herstellung von Feinchemikalien Verwendung finden, möglichst wenigen Belastungen ausgesetzt wird. Würde das Ventil mehrmals geöffnet bzw. geschlossen, würde die Substanz und insbesondere die Körner eines abzufüllenden Pulvers Scherkräften ausgesetzt, was zu einer nicht gewünschten Veränderung der physikalischen Eigenschaften und somit Schädigung der Substanz führen könnte.

Auch eine stetige Öffnung bzw. Schliessung des Ventils trägt zu einer schonenden Behandlung der Substanz bei. Unter einer stetigen Öffnung des Ventils wird dabei eine stetige Vergrösserung des offenen Querschnitt des Ventils verstanden, das heisst

$$A(t) \le A(t^{\cdot})\text{, für alle } t \le t^{\cdot}.$$

Analog wird beim Schliessen des Ventils der offene Querschnitt des Ventils stetig verkleinert, das heisst

$$A(t) \ge A(t^{\cdot})\text{, für alle } t \ge t^{\cdot}.$$

Um die Steuerung des Öffnung- bzw. Schliessvorgangs zu vereinfachen, wird das Ventil schrittweise geöffnet bzw. geschlossen.

Vorteilhafterweise wird das Schätzmodul erstmalig während eines Füllvorgangs angewandt, wenn die von der Waage gemessene Masse der sich im Zielgefäss befindenden Substanz $m$ mindestens einem Drittel der Zielmasse $m_z$ entspricht. Auf diese Weise kann das Ventil relativ schnell ohne Korrektur auf vordefinierte Weise geöffnet werden und der erste Teil der Zielmasse $m_z$ kann schnell eingefüllt werden. Gegen Ende des Abfüllvorgangs ist es vorteilhafter die Substanz langsam und kontrolliert in das Zielgefäss zu füllen um sicher zu stellen, dass am Ende des Abfüllvorgangs die sich im Zielgefäss befindende Substanz möglichst genau der Zielmasse $m_z$ entspricht. Aus diesem Grund ist es auch vorteilhaft, dass die mit Hilfe des Korrekturmoduls durchgeführte Korrektur, erst beim Abfüllen der letzten beiden Dritteln der Zielmasse $m_z$ angewandt wird und/oder das Korrekturmodul nur beim Schliessen des Ventils angewandt wird.

Die wiederholte Anwendung des Korrekturmoduls hat eine positive Auswirkung, da auf diese Weise Differenzen zwischen der geschätzten Masse und der sich tatsächlich im Zielgefäss befindenden Masse wiederholt ausgeglichen werden können. Gerade zum Ende des Füllvorgangs, wenn der Massenstrom bereits relativ klein ist, sollte das Korrekturmodul wiederholt angewandt werden. Dadurch kann die Zielmasse $m_z$ sehr genau angenähert werden und es wird sichergestellt, dass nicht zuviel Masse in das Zielgefäss eingebracht wird. Dadurch wird eine Überschreitung der Zielmasse $m_z$ vermieden.

Das erfindungsgemässe Verfahren findet insbesondere seine Anwendung beim Abfüllen von pulverförmigen oder flüssigen Substanzen. Die flüssigen Substanzen weisen in der Regel komplexe rheologische Eigenschaften auf und sind häufig nichtnewtonscher Natur. Die angestrebte Zielmasse liegt typischerweise in einem Bereich zwischen 0.5mg und 5000mg. Es können jedoch mit diesem Verfahren auch kleinere oder grössere Massen dosiert werden.

In einer vorteilhaften Ausführungsform weist das Ventil eine mit einem kreisförmigem Querschnitt versehenen Austrittsöffnung und ein Verschlusselement auf, wobei die Austrittsöffnung und das Verschlusselement auf einer gemeinsamen Achse angeordnet sind und das Verschlusselement relativ zum Gehäuse um die gemeinsame Achse rotierbar und entlang der gemeinsamen Achse translatorisch verschiebbar aus der beziehungsweise in die Austrittsöffnung aus- und einfahrbar ist und das Verschlusselement einen zylinderförmigen Verschlussbereich und einen Austragungsbereich aufweist, wodurch durch Translation des Verschlusselements das Ventil geöffnet beziehungsweise geschlossen werden kann.

Günstig wirkt sich dabei aus das Ventil durch eine schrittweise translatorische Bewegung des Verschlusselements zu öffnen bzw. zu schliessen.

Vorteilhafterweise weist der Austragungsbereich des Verschlusselements einen variablen Öffnungsquerschnitt $A$ auf. Auf diese Weise ist die Grösse des durch das Ventil fliessenden Massenstroms $\dot{m}$ direkt mit der Stellung des Verschlusselements des Ventils korreliert. Idealerweise korreliert hierbei die Translation der Länge $L$ des Verschlusselements direkt mit dem Öffnungsquerschnitts des Ventils, das heisst $A = A(L)$. Je nach Gestaltung des Ventils liegt eine direkte proportionale Beziehung zwischen Translation des Verschlusselements $L$, des Öffnungsquerschnitts $A$ und dem Massenstrom $\dot{m}$ vor:

$$\Delta L \propto \Delta A \propto \dot{m}$$

Eine solche direkte Proportionalität ist jedoch in realen Fällen in der Regel nicht erreichbar, da auch die Stoffeigenschaften, wie beispielsweise Korngrösse, Fliessverzögerung zu Beginn des Fliessvorgangs oder ähnliches einer direkten Proportionalität entgegenwirken. Jedoch gilt in der Regel, dass bei grösserem Öffnungsquerschnitt ein grösserer Massenstrom vorliegt.

Idealerweise wird das Ventil mit Hilfe von gleichgrossen schrittweisen Translationsbewegungen $\Delta L$ des Verschlusselements geöffnet beziehungsweise geschlossen. Dadurch wird beim Öffnen und Schliessen derselbe Verlauf des Öffnungsquerschnitts $A$ durchlaufen, wodurch Fehler beim Öffnen des Ventils durch Fehler beim Schliessen des Ventils kompensiert werden. Beispielsweise falls die Substanz auf Grund der vorliegenden Korngrösse des Pulvers und/oder der Geometrie des Ventils erst bei einer Translation von $L_1$ anfängt zu fliessen kann davon ausgegangen werden, dass beim Schliessen ab einer Translation von $L_1$ kein Material mehr aus dem Ventil ausgetragen wird.

Vorteilhaft ist die Verwendung eines Verschlusselements, das mit einer variablen Rotationsgeschwindigkeit $\omega$ rotierbar ist, wobei die Rotationsgeschwindigkeit $\omega$ direkt mit dem durch das Ventil fliessenden Massenstrom $\dot{m}$ korreliert.

Von Vorteil ist des Weiteren, dass das Ventil einen Schlagmechanismus aufweist, wobei mit einer variablen Schlagfrequenz $F$ gegen das bereits geöffnete Ventil geschlagen wird. Dabei korreliert die Schlagfrequenz $F$ direkt mit dem durch das Ventil fliessenden Massenstrom $\dot{m}$ und eine Erhöhung der Schlagfrequenz $F$ führt zu einem grösseren Massenstrom $\dot{m}$. Dabei kann sowohl in Richtung der Achse als auch senkrecht zur Richtung der Achse des Verschlusselements geschlagen werden.

Ausserdem kann gegen das Verschlusselement des Ventils und/oder gegen das Gehäuse des Ventils geschlagen werden.

Sowohl bei der Rotation als auch beim Schlagen, wirkt sich vorteilhaft aus, dass dadurch einem Verstopfen des Ventils und/oder der Bildung von Pulverbrücken entgegen gewirkt werden kann. Auf diese Weise kann die Fliessfähigkeit des Pulvers erhalten beziehungsweise erhöht werden.

Die Steuereinheit kann teilweise oder als Ganzes als computerbasiertes System realisiert werden.

Das Verfahren und die Vorrichtung zum Füllen von Zielgefässen werden anhand von Beispielen, wie sie schematisch in den Zeichnungen dargestellt sind, im Folgenden beschrieben. Es zeigen:

Figur 1    eine schematische Darstellung der erfindungsgemässen Vorrichtung zum Füllen von Zielgefässen;

Figur 2    ein Ventil mit einem Ventilgehäuse und einem Verschlusselement;

Figur 3    Graphen mit einem idealisierten Verlauf des Füllvorgangs;

Figur 4    Graph mit einem weitern idealisierten Verlauf des Füllvorgangs bei dem das Ventil bis zu seinem maximalen Öffnungsquerschnitt $A_{\max}$ geöffnet wird;

Figur 5    Graphen mit dem Verlauf des Öffnungsquerschnitts für idealsierte und verschiedene erfindungsgemässe Füllvorgänge und

Figur 6    Graphen, die den idealisierten Einfluss des Öffnungsquerschnitts $A$, der Schlagfrequenz $F$ und der Rotationsgeschwindigkeit $\omega$ auf den Massenstrom $\dot{m}$ verdeutlichen.

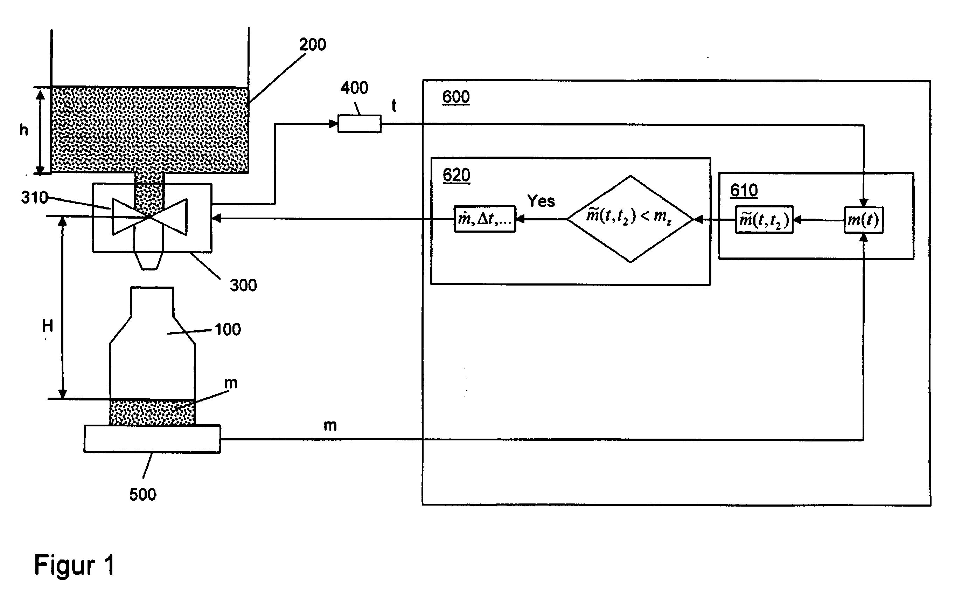

Figur 1 zeigt ein Zielgefäss 100, das mit einer im Reservoir 200 bis zur Füllstandshöhe h sich befindende Substanz über eine Dosiervorrichtung 300 befüllt werden kann. Die Dosiereinrichtung 300 ist mit einer Zeiterfassung 400 verknüpft, mit deren Hilfe die seit zu Beginn des Füllvorgangs vergangenen Zeit erfasst werden kann und das ermittelte Zeitsignal an eine Steuereinheit 600 übermitteln kann. Das Zielgefäss 100 ist auf einer Waage 500 angeordnet, so dass das Gewicht der sich im Zielgefäss 100 befindenden Substanz bestimmt werden kann. Das ermittelte Wäge- beziehungsweise Massensignal kann ebenfalls an die Steuereinheit 600 übermittelt werden. In der Steuereinheit 600 werden das Zeit- und das Massensignal verknüpft und es ergibt sich die zu einem bestimmten Zeitpunkt seit Beginn des Dosiervorgangs vorliegende Masse $m(t)$.

Idealerweise würde das Ventil 310 so lange immer weiter geöffnet, bis sich die Hälfte der gewünschten Zielmasse $m_z$ im Zielgefäss 100 befindet. Idealerweise würde anschliessend das Ventil 310 wieder geschlossen, wobei die zweite Hälfte der gewünschten Zielmasse in das Zielgefäss 100 ausgetragen wird. Dabei sollte das Ventil 310 möglichst schnell und möglichst weit geöffnet und geschlossen werden um möglichst wenig Zeit für den Füllvorgang aufwenden zu müssen. Problematisch ist hierbei, dass die zum Zeitpunkt $t$ sich im Zielgefäss 100 befindende Masse $m(t)$ nicht bekannt ist, da das von der Waage 500 abgegebene Wägesignal auf Grund verschiedener Faktoren verzögert wird. So wird beispielsweise die sich zwischen dem Ventil 310 und dem Zielgefäss 100 in der zwischen dem Ventil 310 und dem Zielgefäss 100 bzw. der im Zielgefäss 100 enthaltenen Substanz über der Höhe $H$ befindende Masse nicht von der Waage 500 erfasst. Des Weiteren wird von der Waage einige Zeit benötigt um ein stabiles Wägesignal zu erzeugen. Diese Ungenauigkeiten machen es notwendig, die zum Zeitpunkt $t$ sich im Zielgefäss 100 befindende Masse $m(t)$ mit Hilfe eines in der Steuereinheit 600 enthaltenen Schätzmoduls 610 zu schätzen und auf Basis der mit Hilfe des Schätzmoduls 610 erhaltenen Daten die Steuerung des Ventils mit Hilfe eines ebenfalls in der Steuereinheit 600 enthaltenes Korrekturmoduls 620 zu korrigieren.

Aus dem Schätzmodul 610 ergibt sich zu mindestens einem Zeitpunkt $t$ während des Füllvorgangs eine Schätzung der sich voraussichtlich am Ende des Füllvorgangs bei $t_2$ sich im Zielgefäss 100 befindenden Masse $\tilde{m}(t,t_2)$, wobei bei der Schätzung davon ausgegangen wird, dass das Ventil 310 ab dem Zeitpunkt $t$ nach einem angenommenen Schliessprofil geschlossen wird. Das Korrekturmodul 620 vergleicht für den Zeitpunkt $t$ die geschätzte Masse $\tilde{m}(t,t_2)$ mit der Zielmasse $m_z$ und falls die für das Ende des Füllvorgangs vorliegende geschätzte Masse $\tilde{m}(t,t_2)$ kleiner als die Zielmasse $m_z$ ist, wird das Ventil 310 derart angesteuert, dass es um eine Zeitdifferenz $\Delta t$ länger mit dem zum Zeitpunkt $t$ vorliegenden Massenstrom $\dot{m}$ geöffnet bleibt und/oder der Massenstrom $\dot{m}$ zum Zeitpunkt $t$ erhöht wird. Die Erhöhung des Massenstroms $\dot{m}$ kann dabei beispielsweise durch ein vergrössertes Öffnungsprofil $A$, einer erhöhten Rotationsgeschwindigkeit $\omega$ und/oder einer erhöhten Schlagfrequenz $F$ erreicht werden.

Für die Bestimmung der am Ende des Füllvorgangs sich im Zielgefäss 100 befindenden Masse $\tilde{m}(t,t_2)$, muss die zum Zeitpunkt $t$ sich im Zielgefäss 100 befindende Masse bekannt sein. Dazu könnte die von der Waage 500 gemessene Masse m(t) herangezogen werden. Leider führt gerade beim Abfüllen kleiner Massen eine Verzögerung des Wägesignals zu nicht tolerierbaren Ungenauigkeiten. Aus diesem Grund kann, insbesondere zu Beginn des Füllvorgangs, nicht die von der Waage 500 gemessene Masse $m(t)$ herangezogen werden. Stattdessen wird eine geschätzte Masse $\tilde{m}(t)$ herangezogen. Eine Möglichkeit der Massenschätzung basiert auf dem Integral des bereits durchlaufenen Öffnungsprofils $\int_{t_1}^{t} A(\tau)d\tau$ des Ventils, das mit einem Korrekturfaktor $f_a$ gewichtet ist:

$$\tilde{m}(t) = f_a \cdot \int_{t_1}^{t} A(\tau)d\tau$$

Dabei wird $f_a$ auch als Gewichtsäquivalent bezeichnet und muss entweder geschätzt werden, oder wird mit Hilfe von Daten aus vorhergehenden Füllvorgängen ermittelt. Eine Möglichkeit ist $f_a$ folgendermassen zu bestimmen:

$$f_a = \frac{m(t_2)}{\int\limits_{t_1}^{t_2} A(t)\,dt}$$

In das Gewichtsäquivalent gehen indirekt die Dichte des Pulvers, die Korngrösse und die Geometrie des Ventils 310 mit ein. Idealerweise wird das Gewichtsäquivalent nach jeder Dosierung neu ermittelt, gespeichert und für den nächsten Dosiervorgang herangezogen. Dadurch erhöht sich die Genauigkeit von $f_a$ mit jedem Dosiervorgang.

Die Schätzung der sich im Zielgefäss befindenden Masse ist besondere zu Beginn des Dosiervorgangs hauptsächlich auf Grund der verzögerten Ausgabe des Wägesignals von zentraler Bedeutung. Je weiter der Dosiervorgang fortschreitet, desto genauer wird auch die von der Waage gemessene Masse $m(t)$. Aus diesem Grund kann bei einem fortgeschrittenen Füllvorgang die von der Waage 500 gemessene Masse $m(t)$ ebenfalls in die Bestimmung der Masse $\tilde{m}(t)$ einfliessen. Eine Möglichkeit der Bestimmung der Masse $\tilde{m}(t)$ ist beispielsweise durch

$$\tilde{m}(t) = f_b \cdot f_a \cdot \int\limits_{t_1}^{t} A(\tau)\,d\tau + (1 - f_b) \cdot m(t) \tag{1}$$

gegeben, wobei $f_b$ ein Gewichtungsfaktor ist, der grösser als Null und kleiner oder gleich Eins ist. Daraus ergibt sich, dass für $f_b = 0$ nur das Wägesignal und für $f_b = 1$ nur der aus dem Zeitintegral und dem Gewichtsäquivalent gebildeten Schätzwert für die Ermittlung der Masse $\tilde{m}(t)$ herangezogen wird. Falls $0 < f_b < 1$, so wird $\tilde{m}(t)$ aus dem Wägesignal und einer Schätzung ermittelt. Eine Möglichkeit $f_b$ zu bestimmen ist durch nachstehende Fallunterscheidung gegeben:

Falls $(\tilde{m}(t) < 1/2 m_z)$ dann ist

$$f_b = \frac{\tilde{m}(t)}{m_z}$$

anderenfalls $(m(t) > 1/2 m_z)$ dann ist

$$f_b = \frac{m(t)}{m_z}$$

sonst ist

$$f_b = 1/2\,.$$

Das heisst je weiter der Füllvorgang fortschreitet, desto stärker wird das Wägesignal der Waage 500 berücksichtigt.

Auf Basis der geschätzten Masse $\tilde{m}(t)$, kann eine Schätzung der am Ende des Füllvorgangs sich im Zielgefäss befindenden Masse $\tilde{m}(t,t_2)$ durchgeführt werden. Dazu kann beispielsweise die über die Zeit integrierte Öffnungsfläche des Ventils herangezogen werden. Dadurch lässt sich $\tilde{m}(t,t_2)$ folgendermassen bestimmen

$$\widetilde{m}(t,t_2) = \widetilde{m}(t) \cdot \frac{\int\limits_{t_1}^{t} A(\tau)d\tau + \int\limits_{t}^{t_2} A(\tau)d\tau}{\int\limits_{t_1}^{t} A(\tau)d\tau} \tag{2}$$

Bei dieser Schätzung wird idealerweise davon ausgegangen, dass das Ventil möglichst schnell geschlossen wird. Das Ende des Füllvorgangs $t_2$ kann aus der bereits verstrichenen Zeit $t$ und der zum Schliessen des Ventils 310 benötigten Zeit $\Delta t$ gebildet werden:

$$t_2 = t + \Delta t$$

Dabei wird in der Regel davon ausgegangen, dass das Ventil 310 zu Beginn des Füllvorgangs genauso schnell geöffnet werden kann, wie es am Ende des Füllvorgangs geschlossen werden kann.

Sollte die ermittelte geschätzte Endmasse $\widetilde{m}(t,t_2)$ kleiner sein als die gewünschte Zielmasse $m_z$, so kann diese Differenz durch das Korrekturmodul 620 durch ein verlängertes Öffnen des Ventils und/oder eine Erhöhung des durch das Ventil fliessenden Massenstroms $\dot{m}$ ausgeglichen werden.

Im weiteren Verlauf des Füllvorgangs kann diese Korrektur wiederholt angewandt werden. Auf diese Weise nähert sich die dosierte Masse, der gewünschten Zielmasse an. Diese Annäherung an die gewünschte Zielmasse $m_z$ ist ein wesentlicher Vorteil dieses Verfahrens. Es können insbesondere Genauigkeitseinflüsse, wie sie beispielsweise durch eine veränderte Füllstandshöhe $h$, die geometrische Beschaffenheit des Ventils oder einem verzögertem Fliessbeginn verursacht werden, ausgeglichen werden. Auch sich über die Zeit verändernde Fliesseigenschaften können so ausgeglichen werden. So liegt beispielsweise beim ersten Füllvorgang eine höhere Füllstandshöhe $h$ vor als bei nachfolgenden Füllvorgängen, was einen grösseren statischen Druck und somit eine grössere Austragungsgeschwindigkeit beim ersten Füllvorgang zur Folge hat.

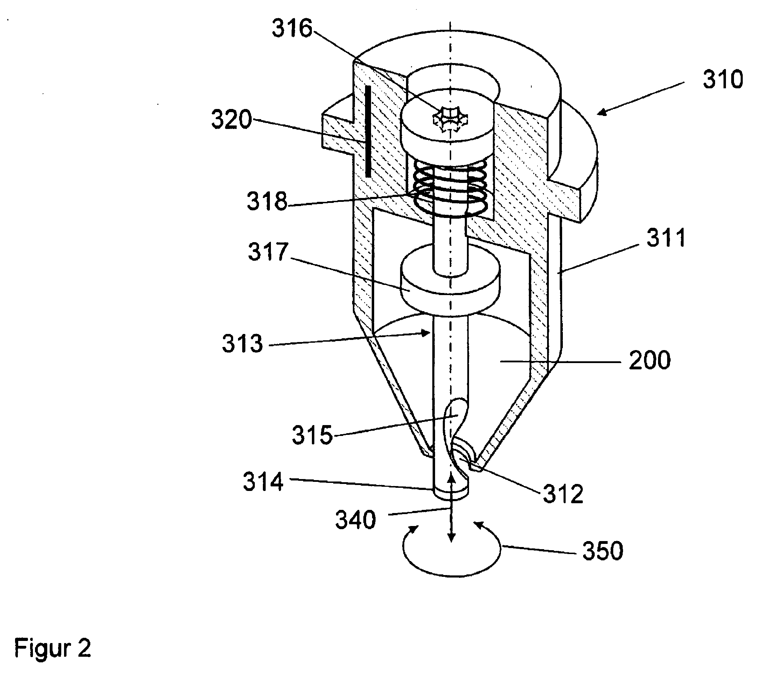

Figur 2 zeigt ein Ventil 310 mit einem Gehäuse 311 und eine mit einem kreisförmigen Querschnitt versehenen Austrittsöffnung 312. In dem Ventil 310 ist ein Verschlusselement 313 angeordnet. Das Verschlusselement 313 weist einen zylinderförmigen Verschlussbereich 314 und einen Austragungsbereich 315 auf. Die Austrittsöffnung 312 und das Verschlusselement 313 sind auf einer gemeinsamen Achse angeordnet und das Verschlusselement 313 kann relativ zum Gehäuse 311 sowohl um die gemeinsame Achse rotieren 350 als auch entlang der gemeinsamen Achse translatorisch 340 verschoben werden. Dadurch kann das Verschlusselement 313 aus der beziehungsweise in die Austrittsöffnung 312 aus- und eingefahren werden. Diese Rotation 350 beziehungsweise Translation 340 des Verschlusselements 313 erfolgt mit Hilfe eines Antriebs, der über ein Kupplungselement 316 mit dem Verschlusselement 313 gekoppelt ist. Zwischen dem Ventilgehäuse 311 und dem Verschlusselement 313 ist ein Rückstellelement 318 angeordnet, das eine Rückstellung des Verschlusselements 313 ermöglicht. Vorzugsweise ist dieses Rückstellelement 318 eine Schliessfeder. Die Rückstellung der Schliessfeder ist durch einen Anschlag 317 begrenzt.

Zwischen dem Verschlusselement 313 und dem Gehäuse des Ventils 311 wird ein Hohlraum gebildet, der als Reservoir 200 für die auszutragende Substanz dient. Durch Translation 340 des Verschlusselements 313 kann die auszutragende Substanz aus dem Reservoir 200, über den Austragungsbereich 315 des Verschlusselements 313 durch die Austrittsöffnung 312 aus dem Ventil 310 in das Zielgefäss 100 gelangen.

Für die Speicherung von Daten weist das Ventil 310 ein Speichermodul 320 auf. Dieses Speichermodul 320 erlaubt beispielsweise die Speicherung von Stoffeigenschaften der zu dosierenden Substanz und/oder ermittelter Fliessparameter aus vorangehenden Füllvorgängen. Dieses Speichermodul 320 ist am oder im Ventilgehäuse 311 angebracht.

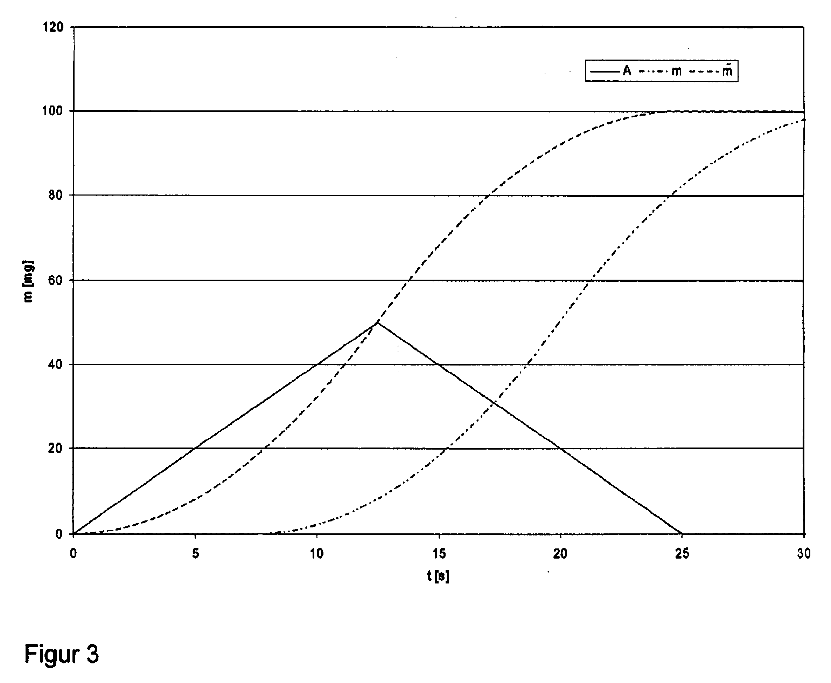

Figur 3 zeigt den Verlauf des Öffnungsquerschnitts $A$ , den Verlauf der von der Waage gemessenen Masse $m$ und den Verlauf der geschätzten Masse $\widetilde{m}$ für einen idealisierten Verlauf eines Füllvorgangs. In diesem idealen Fall wird der Öffnungsquerschnitt $A$ so lange vergrössert bis sich genau die Hälfte der gewünschten Zielmasse $m_z$ im Zielgefäss 100 befindet. Danach wird der Öffnungsquerschnitt $A$ stetig verkleinert, wobei die zweite Hälfte der gewünschten Zielmasse $m_z$ ins Zielgefäss 100 ausgetragen wird. Bei diesem Füllvorgang wird davon ausgegangen, dass der Verlauf des Öffnungsquerschnitts $A$ beim Öffnen und Schliessen mit Ausnahme der Richtung identisch ist. Beim Schliessen des Ventils 310 befindet sich somit genau die gewünschte Zielmasse $m_z$ im Zielgefäss 100. Aufgrund einer Verzögerung des Wägesignals wird am Ende des Füllvorgangs von der Waage 500 noch nicht die Zielmasse $m_z$ angezeigt. Die tatsächlich sich im Zielgefäss 100 befindende Masse $\widetilde{m}$ muss folglich geschätzt werden.

Die bei realen Füllvorgängen auftretenden Ungenauigkeiten, die beispielsweise durch Einfluss der Korngrössen oder der Füllstandshöhe im Reservoir verursacht werden, werden bei diesem idealen Füllvorgang nicht berücksichtigt.

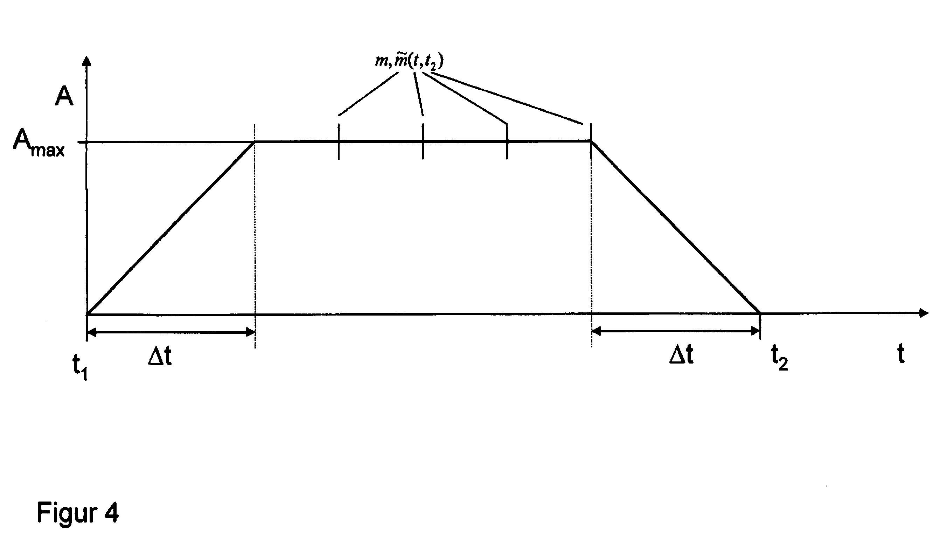

Figur 4 zeigt einen Graphen mit einem weiteren idealisierten Verlauf des Füllvorgangs bei dem das Ventil bis zu seinem maximalen Öffnungsquerschnitt $A_{max}$ geöffnet wird. Ab dem Zeitpunkt $t_1$ wird das Ventil 310 stetig geöffnet, das heisst der Öffnungsquerschnitt $A$ wird kontinuierlich vergrössert. Zum Zeitpunkt $t_1 + \Delta t$ ist der maximalen Öffnungsquerschnitt $A_{max}$ erreicht. Zu verschiedenen Zeitpunkten wird anschliessend die sich im Zielgefäss (100) befindende Masse $\tilde{m}(t)$ nach Gleichung 1 bestimmt beziehungsweise geschätzt. Ausgehend von $\tilde{m}(t)$ wird mit Hilfe von Gleichung 2 eine Schätzung der am Ende des Füllvorgangs sich im Zielgefäss befindenden Masse $\tilde{m}(t,t_2)$ durchgeführt. Falls $\tilde{m}(t, t_2)$ sich innerhalb eines Toleranzintervalls um die Zielmasse $m_z$ befindet

$$m_z \leq \tilde{m}(t,t_2) - \varepsilon, \varepsilon > 0 \,,$$

so wird das Ventil 310 geschlossen. Das Schliessen des Ventils 310 erfolgt durch eine lineare Verkleinerung des Öffnungsquerschnitts $A$ während dem Zeitraum $t_2 - \Delta t$ bis $t_2$.

Bei dem dargestellten Füllvorgang wird der Öffnungsquerschnitt $A$ linear vergrössert beziehungsweise verkleinert. Es ist jedoch auch denkbar den Öffnungsquerschnitt $A$ auf eine andere Weise zu vergrössern oder zu verkleinern. Insbesondere ist eine schrittweise Vergrösserung beziehungsweise Verkleinerung möglich.

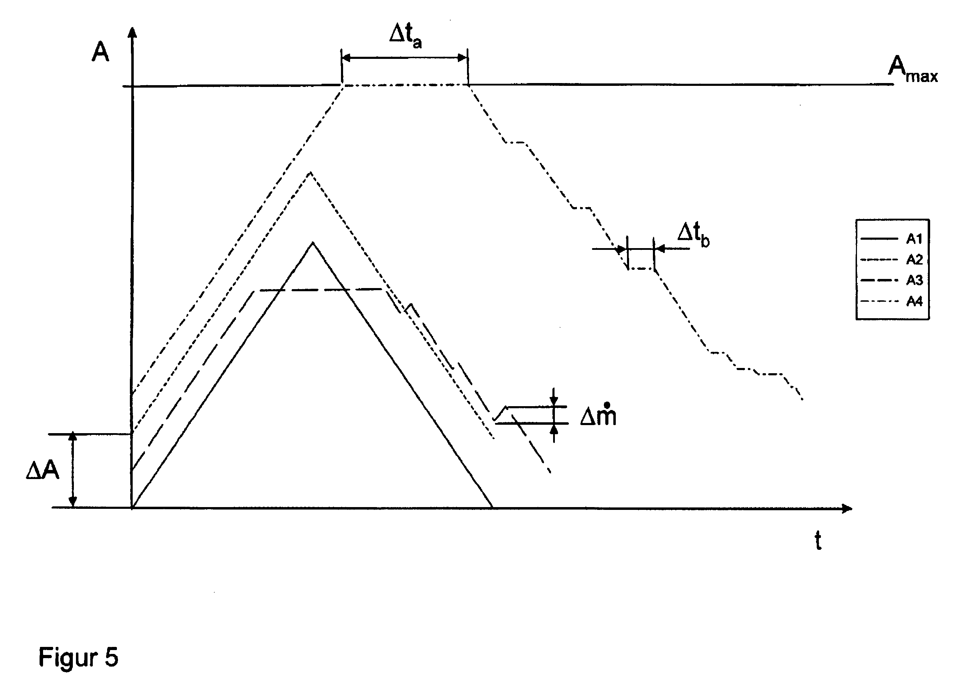

Figur 5 zeigt Graphen mit dem Verlauf des Öffnungsquerschnitts $A$ für idealisierte und verschiedene erfindungsgemässe Füllvorgänge.

Der Graph A1 zeigt zum Vergleich mit den anderen Füllvorgängen den Verlauf des Öffnungsquerschnitt $A$ für einen idealisierten Verlauf eines Füllvorgangs, wie er bereits in Figur 3 dargestellt ist.

Der Graph A2 zeigt ebenfalls den Verlauf des Öffnungsquerschnitt $A$ für einen idealisierten Verlauf eines Füllvorgangs, wie er bereits in Figur 3 dargestellt wurde, mit dem Unterschied, dass die abzufüllende Substanz zu Beginn des Füllvorgangs eine Fliessverzögerung aufweist. Aus diesem Grund muss das Ventil 310 zuerst um einen Öffnungsquerschnitt $\Delta A$ geöffnet bevor Substanz fliessen kann. Diese Fliessverzögerung wird beispielsweise durch die Korngrösse bei pulverförmigen Substanzen oder andere rheologischen Eigenschaften verursacht. Wird das in Figur 2 dargestellte Ventil 310 verwendet, so besteht eine direkte Korrelation zwischen dem Öffnungsquerschnitt $A$ und der Translation 340 des Verschlusselements 313.

Auch die Graphen A3 und A4 weisen eine Fliessverzögerung auf.

Der Graph A3 zeigt den Verlauf des Öffnungsquerschnitts $A$ für einen erfindungsgemässen Füllvorgang. Bei diesem Füllvorgang wird der Öffnungsquerschnitt $A$ durch Öffnen des Ventils 310 so lange vergrössert bis sich ein Teil der gewünschten Zielmasse $m_z$ im Zielgefäss 100 befindet. Dieser Teil ist idealerweise grösser als ein Drittel der Zielmasse $m_z$ und muss kleiner sein als die Hälfte der Zielmasse $m_z$. Falls sich bereits beim Öffnen des Ventils 310 sich die Hälfte der Zielmasse $m_z$ im Zielgefäss 100 befinden würde, würde dies unter der Annahme, dass das Ventil 310 nicht schneller geschlossen als geöffnet werden kann, bedeuten, dass ein Überschreiten der Zielmasse $m_z$ nicht mehr korrigiert werden könnte. Um die Dosierung möglichst schnell durchführen zu können, empfiehlt es sich das Öffnen des Ventils 310 möglichst schnell durchzuführen. Das Schliessen hingegen sollte langsamer durchgeführt werden, da auf diese Weise eine genauere Annäherung an die gewünschte Zielmasse $m_z$ erleichtert wird. Beim Schliessen des Ventils 310 wird wiederholt das Korrekturmodul 620 angewandt, was in diesem Fall durch eine Erhöhung des Massenstroms $\dot{m}$ um $\Delta\dot{m}$ durch eine Vergrösserung des Öffnungsquerschnitts $A$ erreicht wird. Wenn das Ventil 310 geschlossen ist, liegt im Zielgefäss 100 gerade die gewünschte Zielmasse $m_z$ vor. Die sich im Zielgefäss 100 befindende Masse $m$ kann mit Hilfe der Gleichung 1 aus dem Wägesignal der Waage 500 und/oder einer Schätzung bestimmt werden.

Der Graph A4 zeigt den Verlauf des Öffnungsquerschnitts $A$ für einen weiteren erfindungsgemässen Füllvorgang. Bei A4 muss eine grössere Masse als bei den Graphen A1, A2 oder A3 abgefüllt werden. Deshalb muss das Ventil 310 bis zum maximalen Öffnungsquerschnitt $A_{max}$ geöffnet werden. Dieser maximale Öffnungsquerschnitt $A_{max}$ wird so lange beibehalten bis sich ein Teil der gewünschten Zielmasse $m_z$ im Zielgefäss 100 befindet. Dieser Teil ist idealerweiser wie bei dem Graph A2 grösser als ein Drittel der Zielmasse $m_z$ und muss kleiner sein als die Hälfte der Zielmasse $m_z$. Bei dem Graph A4 wird dazu der maximale Öffnungsquerschnitt $A_{max}$ über ein Zeitintervall $\Delta t_a$ beibehalten. Anschliessend wird das Ventil 310 durch Verkleinerung des Öffnungsquerschnitt $A$ wieder geschlossen. Beim Schliessen des Ventils wird dabei das Korrekturmodul 620 angewandt. In diesem Fall wird die Korrektur durch eine um eine Zeitdifferenz $\Delta t_b$ verlängertes Öffnen des Ventils 310 erreicht. Die Korrektur wird so durchgeführt, dass bei geschlossenem Ventil 310 im Zielgefäss 100 gerade die gewünschte Zielmasse $m_z$ im Zielgefäss 100 vorliegt.

Für die in Figur 3, 4 und 5 dargestellten Füllvorgängen wird der Massenstrom ausschliesslich durch eine Veränderung des Öffnungsquerschnitts $A$ erreicht. Es bestehen jedoch noch andere Möglichkeiten Einfluss auf den Massenstrom $\dot{m}$ auszuüben. So kann zum Beispiel der Massenstrom $\dot{m}$ durch Schlagen gegen das Ventil 310 gesteuert werden. Die Schlagfrequenz $F$ korreliert dabei mit dem Massenstrom $\dot{m}$. Wird ausserdem ein Ventil 310 mit einem Verschlusselement 313 verwendet, so kann auch durch Variation der Rotationsgeschwindigkeit ω des Verschlusselements 313 gesteuert werden.

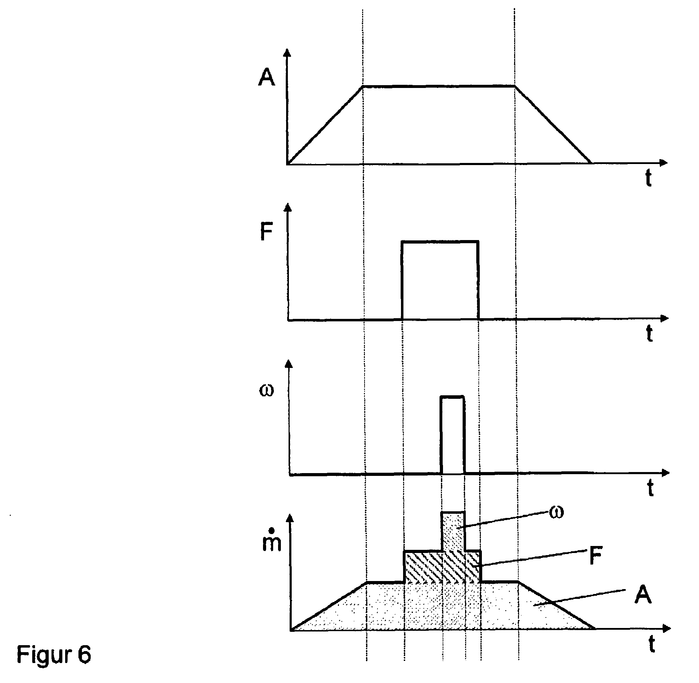

Die in Figur 6 dargestellten Graphen verdeutlichen den Einfluss des veränderten Öffnungsquerschnitts $A$, der sprunghaft ansteigende Schlagfrequenz $F$ und der sprunghaft ansteigende Rotationsgeschwindigkeit ω während eines Füllvorgangs. Die Überlagerung dieser Parameter führt idealerweise zu dem gezeigten Verlauf des Massenstroms $\dot{m}$. Dabei wird deutlich, dass sowohl der Öffnungsquerschnitt $A$, die Schlagfrequenz $F$ und die Rotationsgeschwindigkeit ω einen Einfluss auf den Verlauf des Massenstroms $\dot{m}$ ausüben.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Beispielsweise kann die in Graph 3 dargestellte Korrektur durch Massenstromerhöhung mit dem verlängerten Öffnen des Ventils kombiniert werden. Ferner ist der Einsatz beliebiger Ventile, die eine variable Einstellung des Massenstroms ermöglichen denkbar.

Bezugszeichenliste

| | |
|---|---|
| 100 | Zielgefäss |
| 200 | Reservoir |
| 300 | Dosiervorrichtung |
| 310 | Ventil |
| 311 | Ventilgehäuse |
| 312 | Austrittsöffnung des Ventils |
| 313 | Verschlusselement |
| 314 | Zylinderförmiger Verschlussbereich |
| 315 | Austragungsbereich des Verschlusselements |
| 316 | Kupplungselement |
| 317 | Anschlag |
| 318 | Rückstellelement |
| 320 | Speichermodul |
| 340 | Translation des Verschlusselements |
| 350 | Rotation des Verschlusselements |
| 400 | Zeiterfassung |
| 500 | Waage |
| 600 | Steuereinheit |
| 610 | Schätzmodul |
| 620 | Korrekturmodul |

**Verwendete Symbole**

| | |
|---|---|
| $A$ | Öffnungsquerschnitt |
| $A_{max}$ | Maximaler Öffnungsquerschnitt |
| $d$ | Korngrösse |
| $f_a$ | Gewichtsäquivalenz |
| $f_b$ | Gewichtsfaktor |
| $F$ | Schlagfrequenz |
| $h$ | Füllstandshöhe der sich im Reservoir befindenden Substanz |
| $H$ | Fallhöhe der im Reservoir befindenden Substanz |
| $L$ | Länge der Translation des Verschlusselements |
| $m$ | Masse |

$$\dot{m} = \frac{dm}{dt}$$ Massenstrom

$\tilde{m}(t)$ Geschätzte Masse zum Zeitpunkt $t$

$\tilde{m}(t,t_2)$    Vorausschauende geschätzte Masse

$m_z$    Zielmasse

$t$    Beliebiger Zeitpunkt während des Füllvorgangs

$t_1$    Zeitpunkt des Beginns des Füllvorgangs

$t_2$    Zeitpunkt des Endes des Füllvorgangs

$\Delta t_a$    Ein Zeitintervall

$\Delta t_b$    Ein weiteres Zeitintervall

$\varepsilon$    Toleranz

$\omega$    Rotationsgeschwindigkeit

**Patentansprüche**

1.  Verfahren zum Füllen eines Zielgefässes (100) mit einer vorbestimmten Zielmasse $m_z$ einer fliessfähigen Substanz aus einem Reservoir (200) mit Hilfe einer Dosiervorrichtung (300) zum dosierten Abfüllen der Substanz in das Zielgefäss (100) mit einem Ventil (310), das eine variable Einstellung des Massenstroms $\dot{m}$ vom Reservoir (200) in das Zielgefäss (100) ermöglicht, einer Zeiterfassung (400) zur Bestimmung der seit Beginn des Füllvorgangs verstrichenen Zeit $t$, einer Waage (500) zur Bestimmung der Masse der sich im Zielgefäss (100) befindenden Substanz $m$ und einer Steuereinheit (600) zur Steuerung des Ventils (310), **dadurch gekennzeichnet, dass** die Steuereinheit (600) ein Schätzmodul (610) und ein Korrekturmodul (620) aufweist, wobei

    • das Schätzmodul (610) zu mindestens einem Zeitpunkt $t$ während des Füllvorgangs eine Schätzung der voraussichtlich am Ende des Füllvorgangs beim Zeitpunkt $t_2$ sich im Zielgefäss (100) befindenden Masse $\tilde{m}(t, t_2)$ durchführt, wobei bei der Schätzung davon ausgegangen wird, dass das Ventil (310) ab dem Zeitpunkt $t$ nach einem vordefinierten Schliessprofil geschlossen wird und der Füllvorgang beim Zeitpunkt $t_2$ abgeschlossen ist und
    • das Korrekturmodul (620) die zum Zeitpunkt $t$ geschätzte Masse $\tilde{m}(t,t_2)$ mit der Zielmasse $m_z$ vergleicht und falls die geschätzte Masse $\tilde{m}(t,t_2)$ kleiner als die Zielmasse $m_z$ ist, das Ventil (310) derart angesteuert wird, dass es um eine Zeitdifferenz $\Delta t$ länger mit dem zum Zeitpunkt $t$ vorliegenden Massenstrom geöffnet bleibt und/oder der Massenstrom $\tilde{m}$ zum Zeitpunkt $t$ erhöht wird.

2.  Verfahren nach Anspruch 1, **dadurch gekennzeichnet, dass** die variable Einstellung des Massenstroms $\dot{m}$ mit Hilfe eines variablen Öffnungsquerschnitt A des Ventils (310) ermöglicht wird.

3.  Verfahren nach Anspruch 1, **dadurch gekennzeichnet, dass** die variable Einstellung des Massenstroms $\dot{m}$ mit Hilfe einer Förderschnecke und/oder rotierbaren Rührwerks mit variabler Drehzahl ermöglicht wird.

4.  Verfahren nach einem der vorhergehenden Ansprüche, **dadurch gekennzeichnet, dass** das Schätzmodul (610) zur Schätzung der Masse $\tilde{m}(t,t_2)$ bekannte Daten aus vorhergehenden Füllvorgängen verwendet.

5.  Verfahren nach Anspruch 4, **dadurch gekennzeichnet, dass** die aus vorhergehenden Füllvorgängen bekannte Daten die notwendige Füllzeit $t_2$, das Integral der Öffnung des Ventils $\int_{t_1}^{t_2} A(t)dt$ und/oder das tatsächlich am Ende des Dosiervorgangs vorliegende Gewicht $m(t_2)$ aufweisen.

6.  Verfahren nach einem der vorhergehenden Ansprüche, **dadurch gekennzeichnet, dass** das Ventil (310) während des Füllens des Zielgefässes (100) genau einmal geöffnet und genau einmal geschlossen wird.

7.  Verfahren nach einem der vorhergehenden Ansprüche, **dadurch gekennzeichnet, dass** das Ventil (310) stetig geöffnet und/oder stetig geschlossen wird.

8.  Verfahren nach einem der vorhergehenden Ansprüche, **dadurch gekennzeichnet, dass** das Ventil (310) schrittweise geöffnet und/oder schrittweise geschlossen wird.

9.  Verfahren nach einem der vorhergehenden Ansprüche, **dadurch gekennzeichnet, dass** das Schätzmodul (610) angewandt wird, wenn die von der Waage (500) angezeigte Masse $m$ mindestens einem Drittel der Zielmasse $m_z$ entspricht.

10. Verfahren nach einem der vorhergehenden Ansprüche, **dadurch gekennzeichnet, dass** das Korrekturmodul (620) beim Schliessen des Ventils (310) angewandt wird.

11. Verfahren nach einem der vorhergehenden Ansprüche, **dadurch gekennzeichnet, dass** das Korrekturmodul (620) wiederholt angewandt wird.

12. Verfahren nach einem vorangehenden Ansprüche, **dadurch gekennzeichnet, dass** das Ventil (310) ein Gehäuse (311) und eine mit einem kreisförmigem Querschnitt versehenen Austrittsöffnung (312) und ein Verschlusselement (313) aufweist, wobei die Austrittsöffnung (312) und das Verschlusselement (313) auf einer gemeinsamen Achse angeordnet sind und das Verschlusselement (313) relativ zum Gehäuse (311) um die gemeinsame Achse rotiert und entlang der gemeinsamen Achse translatorisch verschoben und damit aus der beziehungsweise in die Austrittsöffnung (312) aus- und eingefahren wird und das Verschlusselement (313) einen zylinderförmigen Verschlussbereich (314) und einen Austragungsbereich (315) aufweist, wodurch durch Translation (340) des Verschlusselements (313) das Ventil (310) geöffnet beziehungsweise geschlossen wird.

13. Verfahren nach Anspruch 12, **dadurch gekennzeichnet, dass** das Ventil (310) durch eine schrittweise translatorische Bewegung des Verschlusselements (313) geöffnet beziehungsweise geschlossen wird.

14. Verfahren nach Anspruch 13 **dadurch gekennzeichnet, dass** das Ventil (310) mit Hilfe von gleichgrossen schrittweisen Translationsbewegungen $\Delta L$ des Verschlusselements (313) geöffnet beziehungsweise geschlossen wird.

15. Verfahren nach einem der Ansprüche 12 bis 14, **dadurch gekennzeichnet, dass** der Austragungsbereich des Verschlusselements (315) einen variablen Öffnungsquerschnitt $A$ aufweist und die Translation $L$ des Verschlusselements (313) direkt mit dem Öffnungsquerschnitt $A$ des Ventils korreliert.

16. Verfahren nach einem der Ansprüche 12 bis 15, **dadurch gekennzeichnet, dass** das Verschlusselement (313) mit einer variablen Rotationsgeschwindigkeit $\omega$ rotiert, wobei die Rotationsgeschwindigkeit $\omega$ direkt mit dem durch das Ventil (310) fliessenden Massenstrom $\dot{m}$ korreliert.

17. Verfahren nach einem der Ansprüche 12 bis 16, **dadurch gekennzeichnet, dass** das Ventil (310) einen Schlagmechanismus aufweist, womit mit einer variablen Schlagfrequenz $F$ gegen das bereits geöffnete Ventil geschlagen wird und die Schlagfrequenz $F$ direkt mit dem durch das Ventil (310) fliessenden Massenstrom $\dot{m}$ korreliert.

18. Vorrichtung zum Füllen eines Zielgefässes (100) mit einer vorbestimmten Zielmasse $m_z$ einer fliessfähigen Substanz aus einem Reservoir (200), mit einer Dosiervorrichtung (300) zum dosierten Abfüllen der Substanz in das Zielgefäss (100) mit einem Ventil (310), das eine variable Einstellung des Massenstrom $\dot{m}$ vom Reservoir (200) in das Zielgefäss (100) ermöglicht, einer Zeiterfassung zur Bestimmung der seit Beginn des Füllvorgangs verstrichenen Zeit $t$, einer Waage (500) zur Bestimmung der Masse der sich im Zielgefäss (100) befindenden Substanz $m$ und einer Steuereinheit (600) zur Steuerung des Ventils (310), **dadurch gekennzeichnet, dass** die Steuereinheit (600) ein Schätzmodul (610) und ein Korrekturmodul (620) aufweist, wobei

   • mit dem Schätzmodul (610) zu mindestens einem Zeitpunkt $t$ während des Füllvorgangs eine Schätzung der voraussichtlich am Ende des Füllvorgangs beim Zeitpunkt $t_2$ sich im Zielgefäss (100) befindenden Masse $\tilde{m}(t, t_2)$ durchführbar ist, wobei bei der Schätzung davon ausgegangen wird, dass das Ventil (310) ab dem Zeitpunkt $t$ nach einem angenommenen Schliessprofil geschlossen wird und der Füllvorgang beim Zeitpunkt $t_2$ abgeschlossen ist und
   • mit dem Korrekturmodul (620) die zum Zeitpunkt $t$ geschätzte Masse $\tilde{m}(t,t_2)$ mit der Zielmasse $m_z$ vergleichbar ist und falls die geschätzte Masse $\tilde{m}(t,t_2)$ kleiner als die Zielmasse $m_z$ ist, das Ventil (310) derart ansteuerbar ist, so dass es um eine Zeitdifferenz $\Delta t$ länger mit dem zum Zeitpunkt $t$ vorliegenden Massenstrom $\dot{m}$ geöffnet bleibt und/oder der Massenstrom $\dot{m}$ zum Zeitpunkt $t$ erhöht wird.

19. Vorrichtung nach Anspruch 18, **dadurch gekennzeichnet, dass** das Ventil (310) ein Gehäuse (311) und eine mit einem kreisförmigen Querschnitt versehene Austrittsöffnung (312) und ein Verschlusselement (313) aufweist, wobei die Austrittsöffnung (312) und das Verschlusselement (313) auf einer gemeinsamen Achse angeordnet sind und das Verschlusselement (313) relativ zum Gehäuse (311) um die gemeinsame Achse rotierbar und entlang der gemeinsamen Achse translatorisch verschiebbar aus der beziehungsweise in die Austrittsöffnung (312) aus- und einfahrbar ist und das Verschlusselement (313) einen zylinderförmigen Verschlussbereich (314) und einen Austragungsbereich (315) aufweist, wodurch durch Translation des Verschlusselements (313) das Ventil geöffnet beziehungsweise geschlossen werden kann.

**20.** Vorrichtung nach Anspruch 19, **dadurch gekennzeichnet, dass** der Austragungsbereich des Verschlusselements (315) einen variablen Öffnungsquerschnitt A aufweist und die Translation des Verschlusselements (313) direkt mit dem Öffnungsquerschnitts A des Ventils (310) korreliert ist.

**21.** Vorrichtung nach einem der Ansprüche 18 bis 20, **dadurch gekennzeichnet, dass** das Verschlusselement (313) mit einer variablen Rotationsgeschwindigkeit $\omega$ rotierbar ist, wobei die Rotationsgeschwindigkeit $\omega$ direkt mit dem durch das Ventil (310) fliessenden Massenstrom $\dot{m}$ korreliert ist.

**22.** Vorrichtung nach einem der Ansprüche 18 bis 21, **dadurch gekennzeichnet, dass** das Ventil (310) einen Schlagmechanismus aufweist, womit mit einer variablen Schlagfrequenz $f$ gegen das bereits geöffnete Ventil geschlagen werden kann und die Schlagfrequenz $f$ direkt mit dem durch das Ventil (310) fliessenden Massenstrom $\dot{m}$ korreliert ist.


## Claims

**1.** Method of filling a receiving container (100) with a predetermined target mass $m_z$ of a free-flowing substance from a reservoir (200) with the help of a dosage-dispensing device (300) which serves to fill a measured dose of the substance into the receiving container (100), wherein said dosage-dispensing device (300) comprises a valve (310) which allows a variable setting of the mass flow $\dot{m}$ from the reservoir (200) into the receiving container (100), and further comprises a timing capability (400) to determine the time t that has elapsed since the beginning of the fill cycle, a balance (500) to determine the mass m of the substance that is present in the receiving container (100), and a controller unit (600) to control the valve (310), **characterized in that** the controller unit (600) includes an estimating module (610) and a correction module (620), wherein

- at least at one time t during the fill cycle the estimating module (610) performs an estimate of the mass $\tilde{m}(t, t_2)$ that is expected to be present in the receiving container (100) at the end of the fill cycle at the time $t_2$, wherein the estimate is based on the assumptions that from the time t the valve (310) is being closed in accordance with a predefined closing-down profile and the fill cycle is completed at the time $t_2$, and
- the correction module (620) compares the mass $\tilde{m}(t, t_2)$ as estimated at the time t to the target mass $m_z$, and if the estimated mass $\tilde{m}(t,t_2)$ is found to be smaller than the target mass $m_z$, the valve (310) is controlled in such a way that the aperture associated with the mass flow $\dot{m}$ that exists at the time t will be maintained longer by a differential time segment $\Delta t$, and/or the mass flow $\dot{m}$ at the time t is increased.

**2.** Method according to claim 1, **characterized in that** the variable setting of the mass flow $\dot{m}$ is realized by means of a variable aperture cross-section A of the valve (310).

**3.** Method according to claim 1, **characterized in that** the variable setting of the mass flow $\dot{m}$ is realized by means of a conveyor screw and/or a rotary stirrer mechanism with a variable rate of rotation.

**4.** Method according to one of the preceding claims, **characterized in that** the estimating module (610) uses known data from the preceding fill cycles to estimate the mass $\tilde{m}(t, t_2)$.

**5.** Method according to claim 5, **characterized in that** said data that are known from preceding fill cycles comprise

the required time $t_2$ to complete the fill cycle, the time integral $\int_{t_1}^{t_2} A(t)dt$ of the aperture cross-section and/or the actual weight $m(t_2)$ which is present in the receiving container at the end of the dosage-dispensing process.

**6.** Method according to one of the preceding claims, **characterized in that** the valve (310) is opened up exactly once and closed down exactly once during the process of filling the receiving container (100).

7. Method according to one of the preceding claims, **characterized in that** the valve (310) is opened up in a continuous movement and/or closed down in a continuous movement.

8. Method according to one of the preceding claims, **characterized in that** the valve (310) is opened up in a stepwise movement and/or closed down in a stepwise movement.

9. Method according to one of the preceding claims, **characterized in that** the estimating module (610) is used when the amount of mass m indicated by the balance (500) represents at least one-third of the target mass $m_z$.

10. Method according to one of the preceding claims, **characterized in that** the correction module (620) is used in the closing-down of the valve.

11. Method according to one of the preceding claims, **characterized in that** the correction module (620) is used repeatedly.

12. Method according to one of the preceding claims, **characterized in that** the valve (310) comprises a housing (311), an outlet opening (312) with a circular aperture cross-section and a closure element (313), wherein the outlet opening (312) and the closure element (313) are arranged on a common axis, the closure element (313) rotates relative to the housing (311) about the common axis and slides in a translatory movement along the common axis into and out of the outlet opening (312), and wherein the closure element (313) has a cylindrical closure portion (314) and a delivery portion (315), so that through the translatory movement (340) of the closure element (313) the valve (310) is opened and closed.

13. Method according to claim 12, **characterized in that** the valve (310) is opened and/or closed through a stepwise translatory movement of the closure element (313).

14. Method according to claim 13, **characterized in that** the valve (310) is opened and/or closed by moving the closure element (313) in translatory steps $\Delta L$ of equal magnitude.

15. Method according to one of the claims 12 to 14, **characterized in that** the delivery portion of the closure element (315) has a variable aperture cross-section A and that the translatory displacement L of the closure element (313) correlates directly with the aperture cross-section A of the valve.

16. Method according to one of the claims 12 to 15, **characterized in that** the closure element (313) rotates with a variable rotary speed $\omega$, wherein the rotary speed $\omega$ correlates directly with the mass flow $\dot{m}$ that moves through the valve (310).

17. Method according to one of the claims 12 to 16, **characterized in that** the valve (310) is equipped with a tapping mechanism, wherein taps of a variable tapping frequency F are directed at the already opened valve and wherein said tapping frequency F correlates directly with the mass flow $\dot{m}$ moving through the valve (310).

18. Device, operable to fill a receiving container (100) with a predetermined target mass $m_z$ of a free-flowing substance from a reservoir (200) with the help of a dosage-dispensing device (300) which serves to fill a measured dose of the substance into the receiving container (100), wherein said dosage-dispensing device (300) comprises a valve (310) which allows a variable setting of the mass flow $\dot{m}$ from the reservoir (200) into the receiving container (100), and further comprises a timing capability (400) to determine the time t that has elapsed since the beginning of the fill cycle, a balance (500) to determine the mass m of the substance that is present in the receiving container (100), and a controller unit (600) to control the valve (310), **characterized in that** the controller unit (600) includes an estimating module (610) and a correction module (620), wherein

- the estimating module (610) is operable to perform at least at one time t during the fill cycle an estimate of the mass $\tilde{m}(t, t_2)$ that is expected to be present in the receiving container (100) at the end of the fill cycle at the time $t_2$, wherein the estimate is based on the assumptions that from the time t the valve (310) is being closed in accordance with a predefined closing-down profile and the fill cycle is completed at the time $t_2$, and
- the correction module (620) is operable to compare the mass $\tilde{m}(t,t_2)$ estimated at the time t to the target mass $m_z$, and if the estimated mass $\tilde{m}(t, t_2)$ is found to be smaller than the target mass $m_z$, the valve (310) can be controlled in such a way that the aperture associated with the mass flow $\dot{m}$ that exists at the time t will be maintained longer by a differential time segment $\Delta t$, and/or the mass flow $\dot{m}$ at the time t is increased.

**19.** Device according to claim 18, **characterized in that** the valve (310) comprises a housing (311), an outlet opening (312) with a circular aperture cross-section and a closure element (313), wherein the outlet opening (312) and the closure element (313) are arranged on a common axis, the closure element (313) is rotatable relative to the housing (311) about said common axis as well as slidable into and out of the outlet opening (312) in a translatory movement along said common axis, and wherein the closure element (313) has a cylindrical closure portion (314) and a delivery portion (315), so that through the translatory movement of the closure element (313) the valve is opened and closed.

**20.** Device according to claim 19, **characterized in that** the delivery portion (315) of the closure element has a variable aperture cross-section A and the translatory displacement of the closure element (313) is directly correlated with the aperture cross-section A of the valve (310).

**21.** Device according to one of the claims 18 to 20, **characterized in that** the closure element (313) can be set into rotation with a variable rotary speed $\omega$, wherein said rotary speed $\omega$ is correlated directly with the mass flow $\dot{m}$ moving through the valve (310).

**22.** Device according to one of the claims 18 to 21, **characterized in that** the valve (310) comprises a tapping mechanism which is operable to direct taps of a variable tapping frequency F at the already opened valve and wherein said tapping frequency F correlates directly with the mass flow $\dot{m}$ moving through the valve (310).

## Revendications

**1.** Procédé pour le remplissage d'un récipient cible (100), avec une masse cible $m_z$ prédéterminée d'une substance apte à l'écoulement, à partir d'un réservoir (200), à l'aide d'un dispositif de dosage (300) pour le remplissage dosé de la substance dans le récipient cible (100), avec une soupape (310) permettant un réglage variable du flux massique $\dot{m}$ allant du réservoir (200) dans le récipient cible (100), un dispositif de saisie du temps (400) pour la détermination du temps $t$ écoulé depuis le début du procédé de remplissage, une balance (500) pour la détermination de la masse de la substance m située dans le récipient cible (100), et une unité de commande (600) pour la commande de la soupape (310), **caractérisé en ce que** l'unité de commande (600) comporte un module d'estimation (610) et un module de correction (620), dans lequel

• le module d'estimation (610) effectue, au moins à un instant $t$ pendant le procédé de remplissage, une estimation de la masse $\tilde{m}(t,t_2)$ prévisionnelle se trouvant dans le récipient cible (100) à l'instant $t_2$ à la fin du procédé de remplissage, l'estimation supposant que la soupape (310) est fermée à partir de l'instant $t,$ selon un profil de fermeture prédéfini, et que le procédé de remplissage est terminé à l'instant $t_2$, et
• le module de correction (620) compare la masse estimée $\tilde{m}(t,t_2)$ à l'instant $t$ avec la masse cible $m_z$, et si la masse estimée $\tilde{m}(t,t_2)$ est inférieure à la masse cible $m_z$, la soupape (310) est actionnée de manière à rester ouverte plus longtemps, pendant un laps de temps $\Delta t$, en maintenant le flux massique m présent à l'instant $t$, et/ou de manière à ce que le flux massique $\dot{m}$ soit augmenté à l'instant $t$.

**2.** Procédé selon la revendication 1, **caractérisé en ce que** le réglage variable du flux massique $\dot{m}$ est facilité à l'aide d'une section transversale variable $A$ de l'ouverture de la soupape (310).

**3.** Procédé selon la revendication 1, **caractérisé en ce que** le réglage variable du flux massique $\dot{m}$ est réalisé à l'aide d'une vis transporteuse et/ou d'un agitateur rotatif, avec un nombre de tours variable.

**4.** Procédé selon l'une des revendications précédentes, **caractérisé en ce que** pour l'estimation de la masse $\tilde{m}(t,t_2)$, le module d'estimation (610) emploie des données connues, issues de procédés de remplissage antérieurs.

**5.** Procédé selon la revendication 4, **caractérisé en ce que** les données connues issues de procédés de remplissage antérieurs incluent le temps de remplissage $t_2$ nécessaire, l'intégrale de l'ouverture de la soupape $\int_{t_1}^{t_2} A(t)dt$ et/ou le poids $m(t_2)$ effectif à la fin du procédé de remplissage.

**6.** Procédé selon l'une des revendications précédentes, **caractérisé en ce que** la soupape (310) est ouverte exactement une fois et fermée exactement une fois pendant le remplissage du récipient cible (100).

**7.** Procédé selon l'une des revendications précédentes, **caractérisé en ce que** la soupape (310) est ouverte en continue et/ou fermée en continu.

**8.** Procédé selon l'une des revendications précédentes, **caractérisé en ce que** la soupape (310) est ouverte progressivement et/ou fermée progressivement.

**9.** Procédé selon l'une des revendications précédentes, **caractérisé en ce que** le module d'estimation (610) est utilisé lorsque la masse m indiquée par la balance (500) correspond à au moins un tiers de la masse cible $m_z$.

**10.** Procédé selon l'une des revendications précédentes, **caractérisé en ce que** le module de correction (620) est utilisé lors de la fermeture de la soupape (310).

**11.** Procédé selon l'une des revendications précédentes, **caractérisé en ce que** le module de correction (620) est utilisé de façon répétée.

**12.** Procédé selon l'une des revendications précédentes, **caractérisé en ce que** la soupape (310) comporte un boîtier (311) et une ouverture de sortie (312) pourvue d'une section transversale circulaire, ainsi qu'un élément de fermeture (313), dans lequel l'ouverture de sortie (312) et l'élément de fermeture (313) sont agencés sur un axe commun, et l'élément de fermeture (313) effectue une rotation autour de l'axe commun par rapport au boîtier (311), tout en étant déplacé par translation le long de l'axe commun et ainsi introduit et sorti dans/de l'ouverture de sortie (312), et l'élément de fermeture (313) comporte une région de fermeture cylindrique (314) et une région d'extraction (315), la soupape (310) étant ouverte ou fermée par translation (340) de l'élément de fermeture (313).

**13.** Procédé selon la revendication 12, **caractérisé en ce que** la soupape (310) est ouverte ou fermée par un mouvement de translation progressif de l'élément de fermeture (313).

**14.** Procédé selon la revendication 13, **caractérisé en ce que** la soupape (310) est ouverte ou fermée à l'aide de mouvements de translation $\Delta L$, progressifs et de même ampleur, de l'élément de fermeture (313).

**15.** Procédé selon l'une des revendications 12 à 14, **caractérisé en ce que** la région d'extraction de l'élément de fermeture (315) présente une section transversale $A$ d'ouverture variable, et la translation $L$ de l'élément de fermeture (313) est en corrélation directe avec la section transversale A de l'ouverture de la soupape.

**16.** Procédé selon l'une des revendications 12 à 15, **caractérisé en ce que** l'élément de fermeture (313) tourne à une vitesse de rotation variable $\omega$, la vitesse de rotation $\omega$ étant en corrélation directe avec le flux massique $\dot{m}$ s'écoulant par la soupape (310).

**17.** Procédé selon l'une des revendications 12 à 16, **caractérisé en ce que** la soupape (310) comporte un mécanisme de frappe frappant contre la soupape déjà ouverte, avec une fréquence de frappe $F$ variable, la fréquence de frappe $F$ étant en corrélation directe avec le flux massique $\dot{m}$ s'écoulant par la soupape (310).

**18.** Dispositif pour le remplissage d'un récipient cible (100), avec une masse cible $m_z$ prédéterminée d'une substance, à partir d'un réservoir (200), avec un dispositif de dosage (300) pour le remplissage dosé de la substance dans le récipient cible (100), avec une soupape (310), permettant un réglage variable du flux massique $\dot{m}$ allant du réservoir (200) dans le récipient cible (100), un dispositif de saisie du temps pour la détermination du temps écoulé $t$ depuis le début du procédé de remplissage, une balance (500) pour la détermination de la masse de la substance $m$ située dans le récipient cible (100), et une unité de commande (600) pour la commande de la soupape (310), **caractérisé en ce que** l'unité de commande (600) comporte un module d'estimation (610) et un module de correction (620), dans lequel

• le module d'estimation (610) permet d'effectuer, au moins à un instant $t$ pendant le procédé de remplissage, une estimation de la masse $\tilde{m}(t,t_2)$ prévisionnelle se trouvant dans le récipient cible (100) à l'instant $t_2$ à la fin du procédé de remplissage, l'estimation supposant que la soupape (310) est fermée à partir de l'instant $t$, selon un profil de fermeture prédéfini, et que le procédé de remplissage est terminé à l'instant $t_2$, et

• le module de correction (620) permet de comparer la masse estimée $\tilde{m}(t,t_2)$ à l'instant $t$ avec la masse cible $m_z$, et si la masse estimée $\tilde{m}(t,t_2)$ est inférieure à la masse cible $m_z$, la soupape (310) est actionnée de manière à rester ouverte plus longtemps, pendant un laps de temps $\Delta t$, en maintenant le flux massique $\dot{m}$ présent à l'instant $t$, et/ou de manière à ce que le flux massique $\dot{m}$ soit augmenté à l'instant t.

**19.** Dispositif selon la revendication 18, **caractérisé en ce que** la soupape (310) comporte un boîtier (311) et une ouverture de sortie (312) pourvue d'une section transversale circulaire, ainsi qu'un élément de fermeture (313), dans lequel l'ouverture de sortie (312) et l'élément de fermeture (313) sont agencés sur un axe commun, et l'élément de fermeture (313) effectue une rotation autour de l'axe commun par rapport au boîtier (311), tout en étant déplacé par translation le long de l'axe commun et ainsi introduit et sorti dans/de l'ouverture de sortie (312), et l'élément de fermeture (313) comporte une région de fermeture cylindrique (314) et une région d'extraction (315), la soupape étant ouverte ou fermée par translation de l'élément de fermeture (313).

**20.** Dispositif selon la revendication 19, **caractérisé en ce que** la région d'extraction de l'élément de fermeture (315) présente une section transversale A d'ouverture variable, et la translation de l'élément de fermeture (313) est en corrélation directe avec la section transversale A de l'ouverture de la soupape (310).

**21.** Dispositif selon l'une des revendications 18 à 20, **caractérisé en ce que** l'élément de fermeture (313) peut tourner à une vitesse de rotation variable $\omega$, la vitesse de rotation $\omega$ étant en corrélation directe avec le flux massique $\dot{m}$ s'écoulant par la soupape (310).

**22.** Dispositif selon l'une des revendications 18 à 21, **caractérisé en ce que** la soupape (310) comporte un mécanisme de frappe frappant contre la soupape déjà ouverte, avec une fréquence de frappe $f$ variable, la fréquence de frappe $f$ étant en corrélation directe avec le flux massique $\dot{m}$ s'écoulant par la soupape (310).

Figur 1

EP 2 124 025 B1

Figur 2

EP 2 124 025 B1

Figur 3

Figur 4

Figur 5

Figur 6

EP 2 124 025 B1

**EP 2 124 025 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1752744 A
- US 2001027823 A1
- FR 2663008 A
- US 6380495 B1